# EUROPEAN PATENT SPECIFICATION

(11) **EP 0 359 265 B1**
(45) Date of publication and mention of the grant of the patent: **07.06.1995**
(21) Application number: 89117042.5
(22) Date of filing: 14.09.1989
(51) Int. Cl.: H04L 25/49

(54) **Zero string error detection circuit**
Detektoranordnung für Nullbitmuster-Fehler
Circuit de détection d'erreur de motif de zéro

(30) Priority: 14.09.1988 JP 230703/88
(43) Date of publication of application: 21.03.1990
(73) Proprietor: FUJITSU LIMITED, Kawasaki-shi, Kanagawa 211 (JP)
(72) Inventor: Ohwada, Satoshi c/o Fujitsu Limited Pat. Dep., Kawasaki-shi Kanagawa 211 (JP); Takemura, Takenao c/o Fujitsu Limited Pat. Dep., Kawasaki-shi Kanagawa 211 (JP); Kosugi, Toru c/o Fujitsu Limited Pat. Dep., Kawasaki-shi Kanagawa 211 (JP)
(74) Representative: Sunderland, James Harry

(56) References cited:
- US-A- 4 757 499
- PATENT ABSTRACTS OF JAPAN vol. 10, no. 61 (E-387)(2118) March 11, 1986& JP-A-60 214 141 (FUJITSU ) October 26, 1985

## Description

This invention concerns a zero string error detection circuit for detecting a string of zeros in bipolar data.

In digital transmission of audio data and other data, for example, a clock for playback synchronization and data recognition is extracted from the audio data. The clock cannot be extracted if zeros occur in succession as in a no-sound condition. If data is transmitted in 8-bit units, eight successive zeros are converted to an 8-bit code (B8ZS code) of a specific pattern; if data is transmitted in 6-bit units, six successive zeros are converted to a 6-bit code (B6ZS code) of a specific pattern.

At the receiving end, this code, when detected, is restored to the form of the original string of zeros giving rise to the code. This means that, normally, no zero signal should be detected once conversion has taken place at the transmitting end, up to the time of restoration at the receiving end.

However, when a fault occurs in the transmission path, or other facilities, zero signals may occur. Therefore, transmission systems are designed so that when a specified number of zero bits are detected, a signal indicating a zero string error (zero string error detection signal) is issued and that if the zero string error detection signal is issued a number of times in succession, an alarm is issued to the transmitting end.

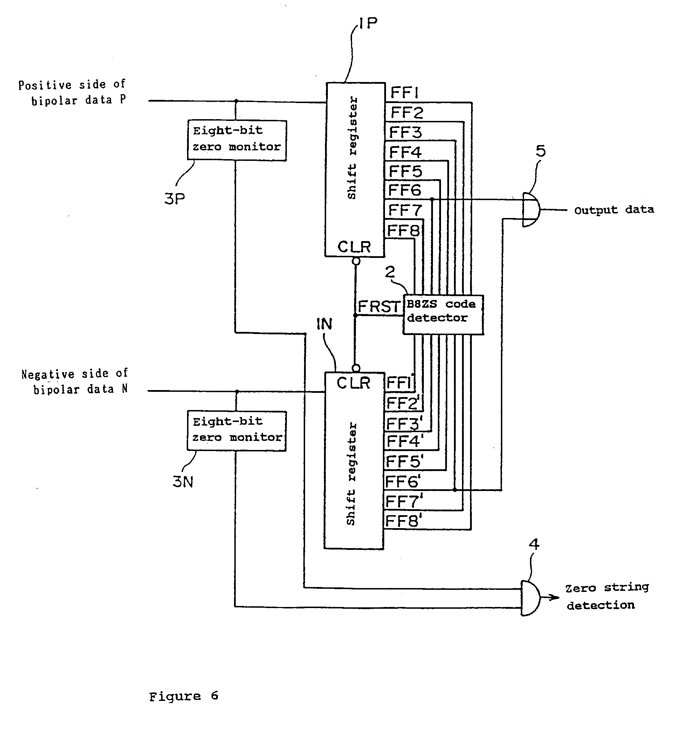

Fig. 6 is a schematic circuit diagram of a conventional zero string error detection circuit. In this Figure, 1P and 1N represent shift registers. Shift register 1P receives the positive side of bipolar data P, which arrives serially, and converts it to parallel data composed of a specific number of bits (8 for example). Shift register 1N receives the negative side of bipolar data N, which arrives serially, and converts it to parallel data composed of a specific number of bits (8 for example).

Component 2 is a B8ZS code detector. When it receives a B8ZS code (000VB0VB where V is a code which indicates that the data does not conform to the coding rule and B is a code which indicates that the data conforms to the coding rule - for example, if the output of shift register 1P is 00010001 and the output of shift register 1N is 00001010, the B8ZS code is detected) from parallel outputs FF1 to FF8 and FF1′ to FF8′ from the shift registers, it issues a reset signal FRST to shift registers 1P and 1N to make the 1P and 1N outputs zero.

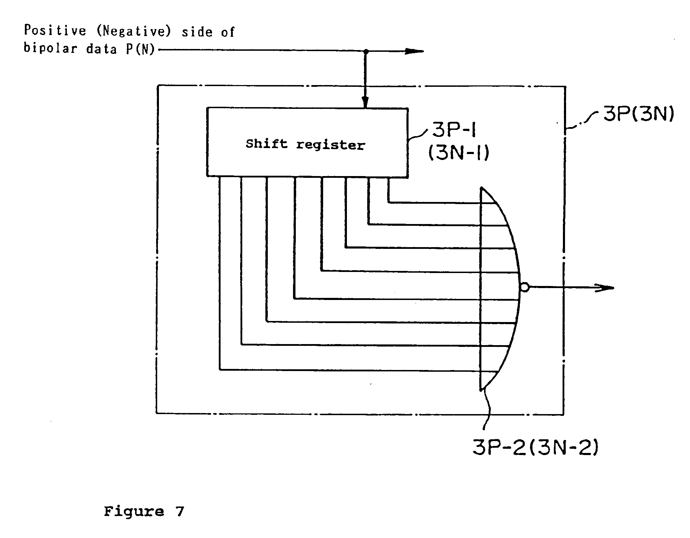

Components 3P and 3N are 8-bit zero monitors. Eight-bit zero monitor 3P outputs a zero string error detection signal when it finds a string of eight zero bits in bipolar data P. Eight-bit zero monitor 3N outputs a zero string error detection signal when it finds a string of eight zero bits in bipolar data N. As indicated in Fig. 7, eight-bit zero monitors 3P and 3N are each provided with an eight-bit shift register 3P-1 (3N-1) and a NOR gate 3P-2 (3N-2) which receives the output of shift register 3P-1 (3N-1).

The zero string detection signals are fed via an AND gate 4 (Fig. 6) to an alarm controller which is not indicated. When the alarm controller detects zero string detection signals a specific number of times in succession, it sends an alarm to the transmitting end or other components.

Component 5 is an OR gate for extracting output data. It receives the sixth outputs FF6 and FF6′ of shift registers 1P and 1N and outputs their OR as serial data.

When B8ZS code detector 2 detects a B8ZS in outputs from shift registers 1P and 1N in the above configuration, it issues a reset signal FRST to shift registers 1P and 1N to make the outputs of shift registers 1P and 1N zero. As a consequence, the B8ZS code is restored to eight zero bits.

If zeros occur in succession because of a fault in the transmission path or other components, eight-bit zero monitors 3P and 3N issue zero string error detection signals, respectively. If the zero string error detection signals are issued a number of times in succession, the alarm controller issues an alarm to the transmitting end.

Zero string error detection systems where a B6ZS code is detected have similar configuration and functions.

The above conventional zero string error detection circuit with a B8ZS code converter involves a problem that a large-scale gate circuit must be used because zero strings are detected both in bipolar data P and in bipolar data N.

A similar problem is involved in a zero string error detection circuit which handles B6ZS codes.

Patent Abstracts of Japan, Vol. 10, No. 61, (E-387) (2118), March 11, 1986 (& JP-A-60 214141) discloses a decoding circuit in which positive and negative bipolar patterns are fed to respective storage sections, converted into unipolar data by a converting circuit and the result stored in a further storage section. When the result is not the BnZS pattern it is transmitted externally via a gate and a terminal. However, when a BnZS detecting section detects the BnZS coded pattern its output controls a switch to block external output of the BnZS coded pattern in the data.

According to the present invention there is provided a zero string error detection circuit, comprising:-
a pair of shift registers which receive positive and negative sides of bipolar data, arriving serially, and convert it to parallel data composed of a selected number of bits;
a BnZs code detector which, upon detecting a specific code in the parallel outputs of the shift registers, issues a reset signal to the shift registers to make the outputs of the shift registers zero; and
a zero string monitor operable to issue a zero string error detection signal;
characterised in that
the zero string monitor is arranged to receive the parallel outputs of the shift registers and is operable to issue a zero string error detection signal when the parallel outputs of the shift registers become zero;
and characterised in that the circuit further comprises
a gate which inhibits said zero string monitor from issuing the zero string error detection signal during a specific period, when said BnZs code detector issues a reset signal.

An embodiment of the present invention can alleviate the above-mentioned problem. It can provide a zero string error detection circuit of a relatively small gate size, making the shift register in the B8ZS or B6ZS code converter serve also to monitor strings of zeros.

Reference is made, by way of example, to the accompanying drawings, in which:-
Fig. 1 is a block diagram of basic features of an embodiment of the present invention,
Fig. 2 is a schematic circuit diagram of an embodiment of the present invention,
Fig. 3 is a schematic circuit diagram showing some main parts of an embodiment of the present invention,
Fig. 4 is a timing chart illustrating procedures for mask signal generation in an embodiment of the present invention,
Fig. 5 is a timing chart illustrating functions available in an embodiment of the present invention,
Fig. 6 is a circuit diagram of conventional circuitry, and
Fig. 7 is a circuit diagram of a conventional eight-bit zero monitor.

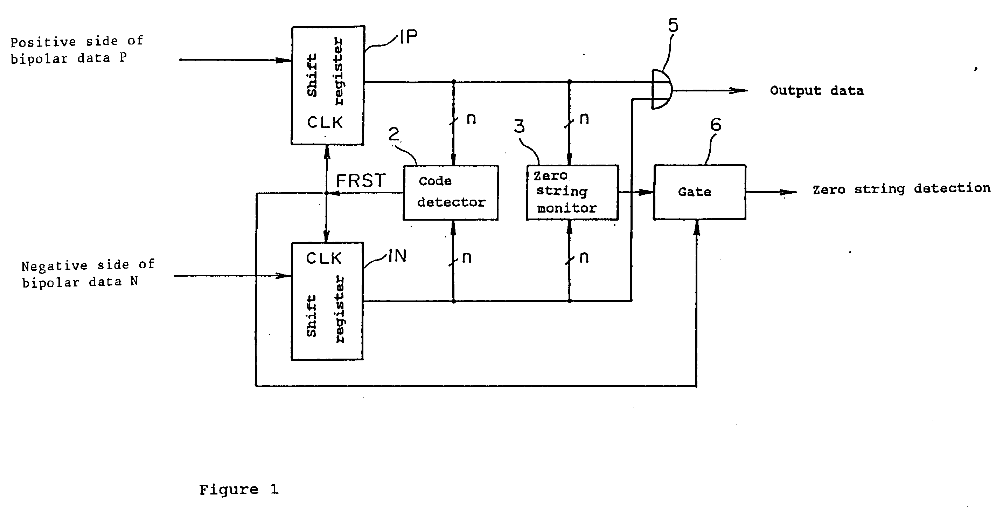

In Fig. 1, components 1P and 1N are respective shift registers which receive the positive side of bipolar data P and the negative side of bipolar data N respectively, which data arrives serially and is converted to parallel data of n bits (where n is a natural number). Component 2 is a code detector which, upon receiving a specific code from parallel outputs of shift registers 1P and 1N, issues a reset signal FRST to shift registers 1P and 1N to make the outputs of shift registers 1P and 1N zero.

Component 3 is a zero string monitor which issues a zero string error detection signal when the parallel outputs of shift registers 1P and 1N become zero. Component 6 is a gate which, upon receiving a reset signal FRST from code detector 2, inhibits zero string monitor 3 from issuing a zero string error detection signal during a specific period.

Component 5 is an OR gate for extracting output data.

When code detector 2 detects a specific code in the outputs of shift registers 1P and 1N in the above configuration, it issues a reset signal FRST to shift registers 1P and 1N to make the outputs of shift registers 1P and 1N zero. As a consequence, the specific code is returned to the original number of zero bits.

Upon receiving a reset signal from code detector 2, gate 6 inhibits zero string monitor 3 from issuing the zero string error detection signal during a specific period. During this period, no alarm is issued to the transmitting end even when a zero string is detected.

If zeros occur in succession because of a fault in the transmission path or other components, zero string monitor 3 issues a zero string detection error signal. Since code detector 2 does not issue a reset signal FRST even when the zero string continues, the mask function of gate 6 is disabled. If the zero string error detection signal is issued a number of times in succession, an alarm or other information is issued to the transmitting end.

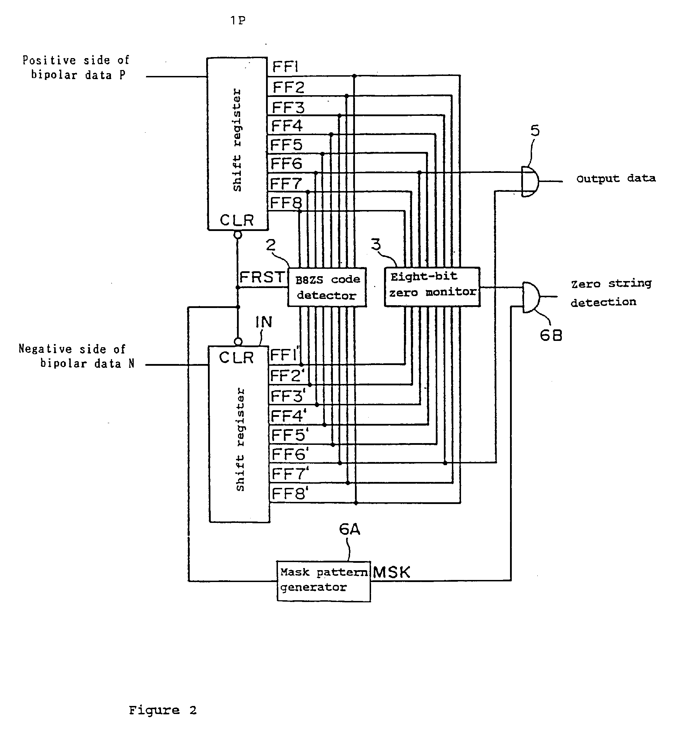

Fig. 2 is a more detailed block circuit of diagram illustrating one embodiment of the invention. In Fig. 2, components 1P and 1N are shift registers; component 2 is a B8ZS code detector; component 3 is an eight-bit zero monitor.

Shift registers 1P and 1N and B8ZS code detector 2 are the same as those of the conventional circuit shown in Fig. 6 and detailed explanation thereof is therefore omitted here.

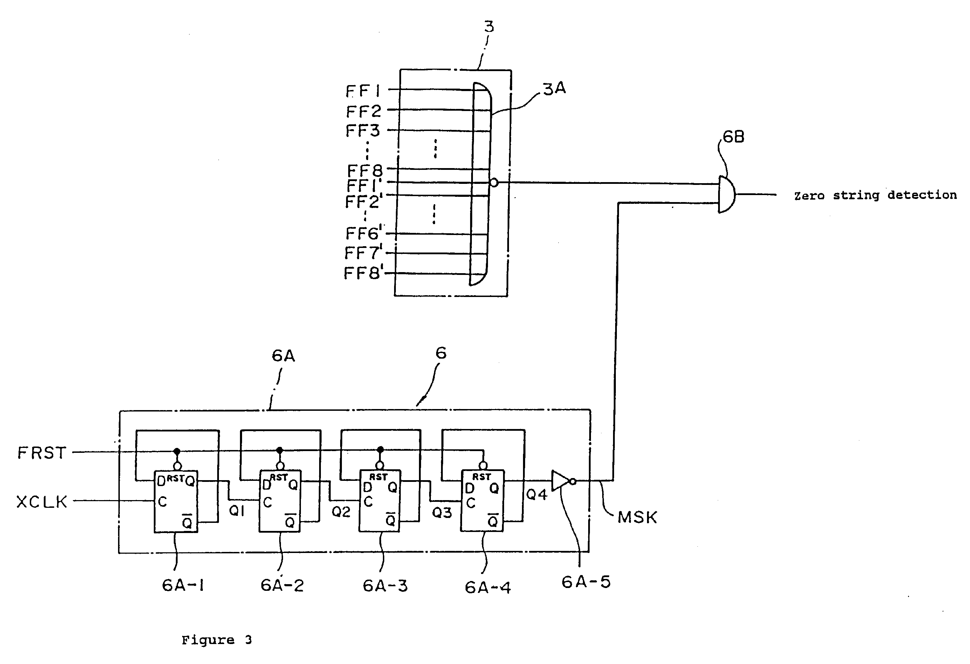

Eight-bit zero monitor 3 issues a zero string error detection signal when the parallel outputs FF1 to FF8 and FF1′ to FF8′ of shift registers 1P and 1N become zero. As indicated in Fig. 3, the zero monitor 3 is provided with a 16-input NOR gate 3A which receives parallel outputs FF1 to FF8 and FF1′ to FF8′ from shift registers 1P and 1N.

In addition, gate 6B is provided to inhibit eight-bit zero monitor 3 from issuing a zero string error detection signal during a specified period (corresponding to eight clock cycles) when a reset signal FRST is output from B8ZS code detector 2.

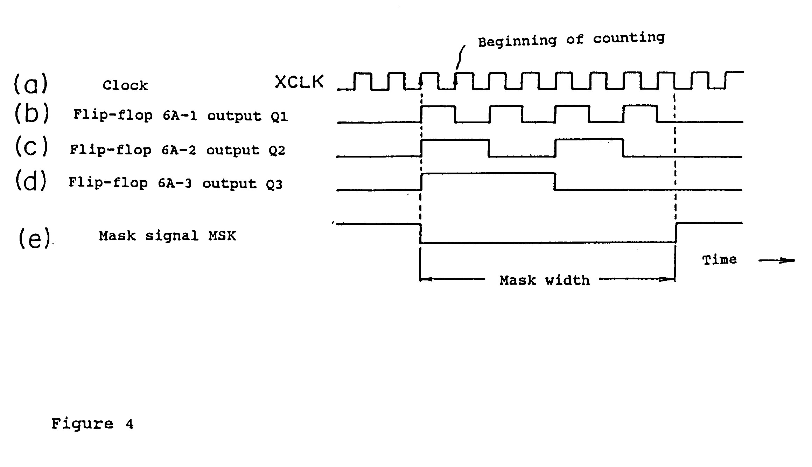

When B8ZS code detector 2 issues a reset signal FRST, a mask pattern generator 6A outputs a mask signal MSK during the above period. As indicated in Fig. 3, the circuit of the mask pattern generator is a combination of a frequency divider fitted with four flip-flops 6A-1, 6A-2, 6A-3 and 6A-4 and an inverter 6A-5. Figs. 4(a) to (e) show the waveforms of the clock input to mask pattern generator 6A and other signals involved in its operation, from which the operation of the mask pattern generator will be clear.

In Fig. 2, component 5 is an OR gate for extracting output data from sixth outputs FF6 and FF6′ of shift registers 1P and 1N.

When B8ZS code detector 2 detects a B8ZS code in the outputs of shift registers 1P and 1N in the above configuration, it issues a reset signal FRST to shift registers 1P and 1N to make the output of shift registers 1P and 1N zero. As a consequence, the B8ZS code is restored to eight zero bits.

When B8ZS code detector 2 issues a reset signal FRST, mask pattern generator 6A issues a mask signal MSK to AND gate 6B over a period of eight clock cycles. This inhibits eight-bit zero monitor 3 from outputting the zero string error detection signal. Therefore, an alarm or other information indicating the detection of a zero string is not issued to the transmitting end.

If zeros occur in succession because of a fault in the transmission path or other components, eight-bit zero monitor 3 issues a zero string error detection signal. However, B8ZS code detector 2 does not issue a reset signal FRST even when the zero string continues. Therefore, the mask function of gate 6 (Fig. 1), containing mask pattern generator 6a (Fig. 2), is disabled. If the zero string error detection signal is issued a number of times in succession, an alarm controller (not shown) which has received those detection signals issues an alarm and other information to the transmitting end.

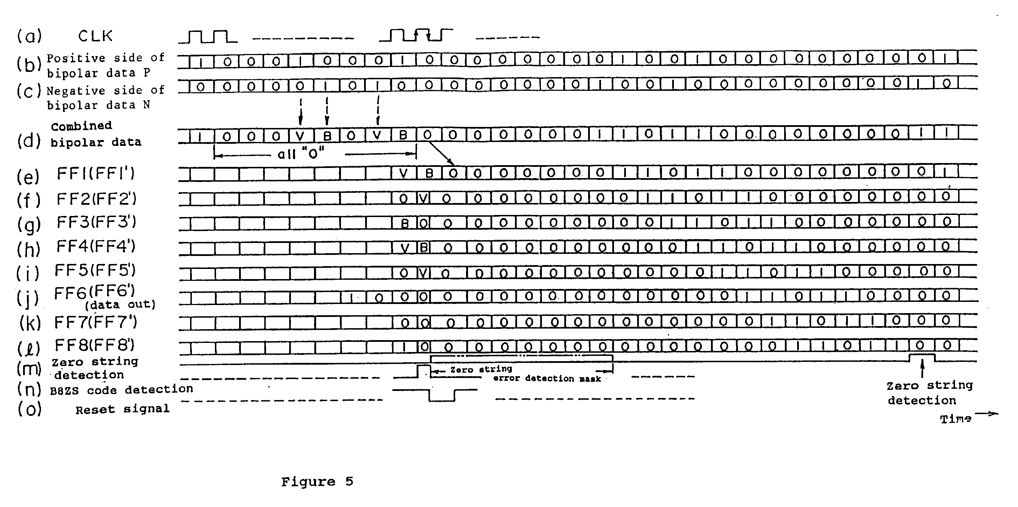

Fig. 5 gives timing charts which apply to the above implementation example: (a) shows the waveform of clock CLK (synchronised with clock XCLK - Fig. 3) supplied to shift registers 1P and 1N; (b) and (c) show states 0 and 1 of positive and negative sides of the bipolar data (P and N); (d) shows the combination of positive and negative sides of the bipolar data (P and N); (e) to (l) show outputs FF1 to FF8 (FF1′ to FF8′) of shift register 1P (1N); (m) shows the waveform of the zero string error detection signal; (n) gives a timing chart for B8ZS code detection; (o) gives a timing chart for reset signal FRST output.

In Fig. 5, (d) shows data which is obtained when the data P and data N shown in (b) and (c) respectively are combined. For simplification, this will be explained on the assumption that the data is serially input in shift registers 1P and 1N and output in parallel.

Entering all data into shift registers 1P and 1N results in output in parallel as shown in (e) to (l). This output is entered into B8ZS code detector 2 and detected as codes. Actually, the parallel output of data P and data N shown in (b) and (c) are designed to be subjected to code detection respectively as shown in (o).

When data indicating all "0" is converted into parallel data by shift registers 1P and 1N, a detection signal is output as shown in (n), followed by reset signals issued to shift registers 1P and 1N.

Then, shift registers FF1 to FF8 (FF1′ to FF8′) output "0" only.

Further, as shown in (m) by a two-dot chain line as "zero string error detection mask", a mask signal is issued.

The mask signal itself has a width of only 7 bits, because the final output is obtained from the output FF6 (FF6′). More specifically, the code indicating all "0" is "000VB0VB", and when all zero is detected, output "0" has already been obtained from the output FF6 (FF6′).

Meanwhile, when 8 zero bits are entered in shift registers 1P and 1N, a zero string detection signal is issued as shown in (m).

Gate size can be made much smaller than in the conventional circuit because shift registers 1P and 1N in the B8ZS code conversion circuit can also be used for eight-bit zero monitoring.

Clearly, embodiments of the invention can be applied to zero string error detection circuits which detect B6ZS code, for example.

The foregoing description is merely illustrative of embodiments of the present invention, but the present invention is not limited thereto.

An embodiment of the present invention provides a zero string error detection circuit which detects a specified number of zeros occurring in succession in bipolar data. A relatively small gate size is achieved by making shift registers in a B8ZS or B6ZS code conversion circuit serve also for zero string monitoring. The zero string error detection circuit consists of a pair of shift registers which receive bipolar data arriving serially and convert it to parallel data composed of a specified number of bits, a code detector which, upon detecting a specific code from the parallel outputs of the shift registers, issues a reset signal to the shift registers to make the outputs of the shift registers zero, a zero string monitor which issues a zero string error detection signal when the outputs of the shift registers become zero, and a gate which inhibits the zero string monitor from issuing the zero string error detection signal during a specific period when the code detector issues a reset signal.

## Claims

1. A zero string error detection circuit, comprising:-
a pair of shift registers (1P and 1N) which receive positive and negative sides of bipolar data, arriving serially, and convert it to parallel data composed of a selected number of bits;
a BnZs code detector (2) which, upon detecting a specific code in the parallel outputs of the shift registers (1P and 1N), issues a reset signal to the shift registers (1P and 1N) to make the outputs of the shift registers (1P and 1N) zero; and
a zero string monitor (3) operable to issue a zero string error detection signal;
characterised in that
the zero string monitor (3) is arranged to receive the parallel outputs of the shift registers (1P and 1N) and is operable to issue a zero string error detection signal when the parallel outputs of the shift registers (1P and 1N) become zero;
and characterised in that the circuit further comprises
a gate (6) which inhibits said zero string monitor (3) from issuing the zero string error detection signal during a specific period, when said BnZs code detector (2) issues a reset signal.

2. A zero string error detection circuit according to claim 1, wherein said zero string monitor (3) has a NOR gate (3A) which receives the parallel outputs of shift registers (1P and 1N).

3. A zero string error detection circuit according to claim 1, wherein said gate (6) is provided with a mask pattern generator (6A) and an AND gate (6B).

4. A zero string error detection circuit according to claim 3, wherein the mask pattern generator (6A) is operable to issue a mask signal during the period of a reset signal if issued from the code detector (2).

## Patentansprüche

1. Erkennungsschaltung für eine fehlerhafte Nullzeichen-Kette, umfassend
ein Paar Schieberegister (1P und 1N), die die positiven und negativen Seiten seriell ankommender, bipolarer Daten empfangen und in parallele Daten umsetzen, die aus einer ausgewählten Anzahl Bits aufgebaut sind,
ein BnZs-Codeerkenner (2), der, nachdem er einen besonderen Code in den parallelen Ausgangssignalen der Schieberegister (1P und 1N) erkannt hat, ein Rücksetzsignal an die Schieberegister (1P und 1N) sendet, um die Ausgänge der Schieberegister (1P und 1N) auf null zu setzen, und
eine Nullzeichenketten-Üherwachung (3), betreibbar zum Abgeben eines Erkennungssignals für eine fehlerhafte Nullzeichen-Kette,
dadurch gekennzeichnet, daß die Nullzeichenketten-Überwachung (3) zum Empfangen der parallelen Ausgangssignale der Schieberegister (1P und 1N) eingerichtet ist und zum Abgeben eines Erkennungssignals für eine fehlerhafte Nullzeichen-Kette betreibbar ist, wenn die parallelen Ausgänge der Schieberegister (1P und 1N) null werden,
und dadurch, daß die Schaltung zudem umfaßt
ein Gatter (6), das die Nullzeichenketten-Überwachung (3) während eines bestimmten Zeitraums am Abgeben eines Erkennungssignals für eine fehlerhafte Nullzeichen-Kette hindert, wenn der BnZs-Codeerkenner (2) eine Rücksetzsignal abgibt.

2. Erkennungsschaltung für eine fehlerhafte Nullzeichen-Kette nach Anspruch 1, wobei die Nullzeichenketten-Überwachung (3) ein NOR-Gatter (3A) aufweist, das die parallelen Ausgangssignale der Schieberegister (1P und 1N) empfängt.

3. Erkennungsschaltung für eine fehlerhafte Nullzeichen-Kette nach Anspruch 1, wobei das Gatter (6) mit einem Maskenmuster-Erzeuger (6A) und einem UND-Gatter (6B) versehen ist.

4. Erkennungsschaltung für eine fehlerhafte Nullzeichen-Kette nach Anspruch 3, wobei der Maskenmuster-Erzeuger (6A) zum Abgeben eines Maskensignals betreibbar ist, und zwar während der Zeitspanne, in der der Codeerkenner (2) ein Rücksetzsignal abgibt.

## Revendications

1. Circuit de détection d'erreur dans une suite de zéros, comprenant :
une paire de registres à décalage (1P et 1N) qui reçoivent les côtés positif et négatif de données bipolaires, arrivant en série, et qui les convertissent en données parallèles constituées d'un nombre sélectionné de bits ;
un détecteur (2) de code BnZS qui, au moment de la détection d'un code spécifique dans les signaux de sortie parallèles des registres à décalage (1P et 1N), délivre un signal de repositionnement aux registres à décalage (1P et 1N) afin de rendre nuls les signaux de sortie des registres à décalage (1P et 1N) ; et
un contrôleur (3) de suite de zéros ayant pour fonction de délivrer un signal de détection d'erreur dans une suite de zéros ;
caractérisé en ce que :
le contrôleur (3) de suite de zéros est conçu de façon à recevoir les signaux de sortie parallèles des registres à décalage (1P et 1N) et a pour fonction de délivrer un signal de détection d'erreur dans une suite de zéros lorsque les signaux de sortie parallèles des registres à décalage (1P et 1N) deviennent nuls ;
et caractérisé en ce que le circuit comprend en outre :
une porte (6) qui interdit audit contrôleur (3) de suite de zéros de délivrer le signal de détection d'erreur dans une suite de zéros pendant une durée spécifique, lorsque ledit détecteur (2) de code BnZS délivre un signal de repositionnement.

2. Circuit de détection d'erreur dans une suite de zéros selon la revendication 1, où ledit contrôleur (3) de suite de zéros possède une porte NI (3A) qui reçoit les signaux de sortie parallèles des registres à décalage (1P et 1N).

3. Circuit de détection d'erreur dans une suite de zéros selon la revendication 1, où ladite porte (6) est dotée d'un générateur de motif de masquage (6A) et d'une porte ET (6B).

4. Circuit de détection d'erreur dans une suite de zéros selon la revendication 3, où le générateur de motif de masquage (6A) a pour fonction de délivrer un signal de masquage pendant la durée d'un signal de repositionnement si celui-ci est délivré par le détecteur de code (2).
